Europäisches Patentamt

European Patent Office

Office européen des brevets

(19)

(11) Veröffentlichungsnummer: **0 236 801**

**B1**

(12) **EUROPÄISCHE PATENTSCHRIFT**

(45) Veröffentlichungstag der Patentschrift: 25.07.90

(21) Anmeldenummer: 87102233.1

(22) Anmeldetag: 17.02.87

(51) Int. Cl.⁵: **C 21 B 13/14, C 21 B 13/00**

(54) **Verfahren zur Herstellung von Eisen.**

(30) Priorität: 08.03.86 DE 3607776

(43) Veröffentlichungstag der Anmeldung:
16.09.87 Patentblatt 87/38

(45) Bekanntmachung des Hinweises auf die
Patenterteilung:
25.07.90 Patentblatt 90/30

(84) Benannte Vertragsstaaten:
AT BE DE ES FR GB IT LU NL SE

(56) Entgegenhaltungen:
DE-A-2 629 743
FR-A-1 314 435
US-A-3 028 231
US-A-3 186 830
US-A-3 734 716

(73) Patentinhaber: KLÖCKNER CRA PATENT GMBH
Klöcknerstrasse 29
D-4100 Duisburg (DE)

(72) Erfinder: Brotzmann, Karl, Prof. Dr. Dr.
Fentschstrasse 6
D-8458 Sulzbach-Rosenberg (DE)
Erfinder: Turner, Richard Edwin, Dr
verstorben (DE)
Erfinder: Moodie, Jonathan Paul
Batteriegasse 10
D-8450 Amberg (DE)

(74) Vertreter: Kador & Partner
Corneliusstrasse 15
D-8000 München 5 (DE)

EP 0 236 801 B1

## Beschreibung

Die Erfindung bezieht sich auf ein Verfahren zur Herstellung von Eisen in einem gestreckten Reaktionsgefäß, das über Unterbaddüsen und Aufblaseinrichtungen verfügt, bei dem der Schmelze kohlenstoffenthaltende Brennstoffe, Eisenerz und/oder vorreduziertes Erz zugeführt und bei dem der Schmelze entweichenden Reaktionsgase, vorzugsweise CO und $H_2$, ein- oder mehrstufig mit sauerstoffhaltigen Gasen nachverbrannt werden.

Ein bekanntes Verfahren der gleichen Gattung beschreibt die deutsche Offenlegungsschrift 31 33 575. Danach werden in einem Eisenbadreaktor kohlenstoff- und/oder kohlenwasserstoffhaltige Brennstoff vergast und zusätzlich zur Gaserzeugung flüssiges Eisen aus Stoffen, die Eisen mindestens teilweise in oxidischer Form enthalten, hergestellt. Die bei der Kohleverbrennung im Eisenbad freigesetzte Energie steigert man bei diesem Verfahren über die Nachverbrennung der gasförmigen Reaktionsprodukte im Gasraum des Eisenbadreaktors mit auf die Badoberfläche gerichteten Freistrahlen aus sauerstoffenhaltenden Medien und Rückübertragung der dabei erzeugten Wärme an die Schmelze.

Bei der Durchführung dieses bekannten Verfahrens hat es sich gezeigt, daß durch die starke Gasentwicklung in der Eisenschmelze flüssiges Eisen aus dem Reaktionsgefäß ausgetragen wird. Einen bodenblasenden 60 t-Stahlherstellungskonverter üblicher Bauart hat man nach dem Verfahren gemäß der genannten Offenlegungsschrift betrieben und dabei aus Kohle und Erz flüssiges Eisen gewonnen. Bei der Durchführung des Prozesses leitet man die Reaktionspartner Kohle und Erz sowie eine Teilmenge Sauerstoff über Düsen mit Schutzmediumummantelung im Konverterboden dem Eisenbad zu. Im Gasraum des Konverters werden die dem Eisenbad entweichenden Reaktionsgase durch Sauerstoff aus Düsen oberhalb der Badoberfläche nachverbrennt, und es ließ sich ein Nachverbrennungsrad von ca. 30% erreichen. Um 1 t flüssiges Eisen aus Eisenerz zu erzeugen, mußte man der Schmelze etwa 1 t Kohle zuführen. Grundsätzlich läuft das Verfahren, wie in der genannten Offenlegungsschrift beschrieben, ab, jedoch ist der Eisenverlust durch Spritzer, die einerseits direkt auf dem Konverter geschleudert werden und die andereseits der Abgasstrom mitreißt, erheblich, und damit ist der Gasamtprozeß nicht mehr wirtschaftlich.

Die Aufgabe der vorliegenden Erfindung besteht darin, ein Verfahren zur Eisenherstellung aus kohlenstoffhaltigen Brennstoffen und Eisenerz zu schaffen, das die Eisenverluste vermeidet.

Diese Aufgabe konnte gemäß der Erfindung dadurch gelöst werden, daß die Abgasöffnung des Reaktionsgefäßes versetzt zur Reaktionszone der kohlenstoffhaltigen Brennstoffe und damit außerhalb des Eruptions- und Spritzbereiches angeordnet wird, die Abgastemperatur in der an die Abgasöffnung anschließenden Heißgasleitung über der Erstarrungstemperatur der im Abgasstrom mitgeführten Eisentröpfchen gehalten und das Abgas danach in einem anschließenden Raum auf unter 1000°C abgekühlt wird.

Gemäß der Erfindung besteht der erste Lösungsschritt für die gestellte Aufgabe darin, ein gestrecktes Reaktionsgefäß, beispielsweise einen Trommelkonverter, zu benutzen, bei dem die Abgasöffnung versetzt zur Reaktionszone der kohlenstoffhaltigen Brennstoffe und damit außerhalb der Eruptions- und Spritzzone angeordnet ist, so daß sich oberhalb dieser Reaktionszone keine Öffnungen mit größerem Durchmesser befinden, durch die Metallspritzer direkt aus dem Gefäß herausgeschleudert werden.

Überraschenderweise hat es sich jedoch gezeigt, daß auch bei einem derartigen Reaktionsgefäß das Abgas eine große Menge von feinen Eisentröpfchen mit einer Tröpfchengröße bis ca. 0.1 mm mitreißt. Die Menge beträgt ca. 100 bis 200 kg/t eingeblasener Kohle, und meistens haben die identifizierbaren Tröpfchen einen Durchmesser von 0.01 bis 0.1 mm. Diese vom Abgasstrom mitgeführten Tröpfchen lagern sich in der Abgasleitung an und führen dort nach relativ kurzer Betriebszeit zu Verstopfungen. Beispielsweise fanden sich in der Abgasleitung eines 10 t-Konverters bereits nach einer Betriebszeit von einer bis zehn Stunden und Kohledurchsätzen von 3 bis 30 t erhebliche Ansätze bis hin zu Leitungsverstopfungen.

Gemäß der Erfindung lassen sich diese Ansätze in der Abgasleitung dadurch vermeiden, daß die Abgastemperatur in der an die Abgasöffnung anschließenden Heißgasleitung über der Erstarrungstemperatur der im Abgasstrom mitgeführten Eisentröpfchen gehalten wird. Dieser heiße Bereich der Abgasleitung mündet in einen größeren Raum, in dem dann die Abgase auf unter 1000°C abgekühlt werden.

Gemäß der Erfindung kann man diesen Gasabkühlraum grundsätzlich frei gestalten. Bevorzugt weist er jedoch eine annähernd zylindrische Form auf, wobei der Durchmesser der Zylinders ein Mehrfaches des Durchmessers der Heißgasleitung beträgt. Der Gasabkühlraum hat entweder wassergekühlte Wände oder ist mit feuerfestem Material ausgekleidet. Auch eine Kombination dieser beiden Möglichkeiten hat sich bewährt. Es liegt im Sinne der Erfindung, den Gasabkühlraum so lang auszulegen, damit das frei einströmende Abgas aufgrund der Verweilzeit im Gasabkühlraum eine Temperaturerneidrigung auf unter 1000°C erfährt.

Eine weitere besonders vorteilhafte Ausgestaltung der Erfindung besteht darin, die Absage beim beim oder unmittelbar nach dem Verlassen des Abgaskanals mit kalten Gasen, Flüssigkeiten und/oder pulverförmigen Stoffen zu mischen, um damit die Temperatur des Abgasstromes auf einen Wert unterhalb der genannten Maximaltemperatur von 1000°C abzukühlen. Pulverförmige Stoffe haben darüber hinaus den Vorteil, daß sich die durch das Abgas mitgerissenen Eisentröpfchen an diese Stoffe anlagern. Als pulverförmige Substanzen kommen beispielsweise aufgemahlene Erze, Kalk, Kalkstein, Rohmagnesit, Kohle, Koks, einzeln oder in beliebigen Mischungen infrage.

Gemäß der Erfindung kann eine zusätzliche Reaktion zwischen den genannten pulverförmigen Stoffen und dem Abgas selbst erfolgen. Beispielsweise kann Kalkstein entsäuert, Erz teilweise reduziert oder Kohle verkokt werden. Für den Ablauf dieser Reaktionen kann es erforderlich sein, die Feststoff-Gas-Gemische in einer bestimmten Zeit aufzuheizen und auf Reaktionstemperatur zu halten. Demgemäß kann es zweckmäßig sein, möglichst feinkörnige Stoffe zu verwenden. Zum Beispiel haben sich bei Eisenerz Korngrößen von weniger als 0.1 mm bewährt, um die Teilchen in einer Gesamtverweilzeit von weniger als 1 sek bis zur Wüstit-Stufe zu reduzieren.

Eine vorteilhafte Ausgestaltung der Erfindung besteht darin, die abgasführende Verbindung zwischen dem Reaktionsgefäß und dem Gasabkühlraum als gerade Heißgasleitung auszubilden. Ein gerader Kanal wirkt sich vorteilhaft bei der Vermeidung von Ansätzen aus. Es hat sich gezeigt, daß eine Umlenkung des heißen Abgasstromes dazu führt, daß sich an der Umlenkstelle bevorzugt Metalltröpfchen abscheiden, insbesondere wenn man im Reaktionsgefäß einen hohen Nachverbrennungsgrad von etwa 30 bis 50% erreicht und die eisenhaltigen Tröpfchen teilweise oxidiert vorliegen. Diese oxidierten Partikel führen zu Reaktionen mit der feuerfesten Auskleidung der Abgasleitung und ergeben dann relativ festsitzende Ansätze. Es liegt weiterhin im Sinne der Erfindung, diesen heißen Teil der Abgasleitung möglichst kurz zu halten, beispielsweise nur in der Länge einer erforderlichen Drehdurchführung mit den entsprechenden Flansch-verbindungen.

Wirtschaftliche Vorteile ergeben sich weiterhin, wenn bei dem erfindungsgemäßen Verfahren als sauerstoffhaltiges Gas vorgeheizte Luft zur Anwendung kommt. Bläst man vorgewärmte Luft von 1000 bis 1200°C, d.h. Heißwind, derart auf die Badoberfläche, daß die Reaktionsgase im Gasraum des Reaktionsgefäßes angesaugt, nachverbrannt und die dabei freiwerdende Energie weitgehend an die Schmelze übertragen wird, so lassen sich etwa 40 bis 50% der aus der Oxidation von Kohle zu $CO_2$ und $H_2O$ gewinnbaren Energie im Prozeß ausnutzen. Beispielweise genügen unter dieser Voraussetzung 700 kg Kohle für die Herstellung von 1 t flüssigem Eisen. Die dabei gleichzeitig entstehende Gasmenge reicht aus, um bei einer Mischung mit kaltem Feinerz eine mittlere Temperatur des Feststoff-Gas-Gemisches von etwa 1050°C einzustellen. Für einen störungsfreien Betrieb, bei dem in den Abgasleitungen keine Ansätze auftreten, ist eine weitere Temperaturerniedrigung der Abgase auf ca. 900°C anzustreben. Dies kann erfindungsgemäß durch die Zugabe einer Teilmenge Kohle zum Erz erfolgen, oder es kann ein Teil des Abgases kalt rückgeführt und zur weiteren Temperaturabsenkung der Feststoff-Gas-Mischung auf die für die Erzreduktion optimale Temperatur von ca. 800 bis 900°C eingesetzt werden.

Die Erfindung wird im folgenden anhand einer Darstellung und eines nichteinschränkenden Beispiels näher erläutert.

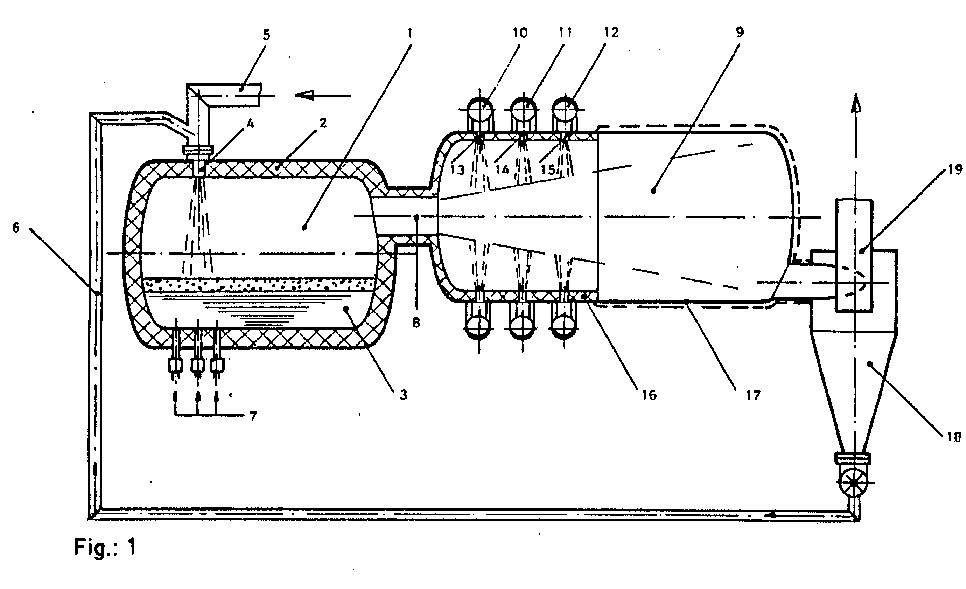

Figur 1 zeigt den Längsschnitt durch ein Reaktionsgefäß mit angekoppeltem Gasabkühlraum.

In einem trommelförmigen Reaktionsgefäß 1 mit neuer Ausmauerung 2 und einem lichten Volumen von 150 m³ befindet sich die Eisenschmelze 3 bis 50 bis 120 t, einem Kohlenstoffgehalt von ca. 2.5% und einer Temperatur von 1550°C. Über Windformen 4, die von der Heißgasleitung 5 versorgt werde, bläst man Heißwind mit einer Temperatur von 1200°C und einer Blasrate von 2000 Nm³/min auf die Badoberfläche. Dem Heißwindstrom mischt man unmittelbar vor dem Eintritt in die Windform 4 ein Gemisch aus Koks, Kalk und zu Wüstit reduziertem Feinerz zu. Das Gemisch weist einer Temperatur von 800°C auf und gelangt über die Leitung 6 zur Heißwindleitng 5. Die Förderraten der einzelnen Komponenten dieser Mischung betragen für das teilreduzierte Erz 1350 kg/min, für Koks 400 kg/min und für Kalk 90 kg/min. Durch die Bodendüsen 7 mit einem lichten Durchmesser von 18 mm bläst man 200 kg/min Gasflammkohle in das Metallbad und erreicht damit gleichzeitig eine ausreichende Badbewegung.

Auf diese Weise stellt man pro Minute etwa 1 t flüssiges Eisen her. Das Abgas mit einer Temperatur von ca. 1680°C wird auf kürzestem Weg durch die Heißgasleitung 8 in den Gasabkühlraum 9 geleitet. In diesem Behälter 9 kühlt man das Abgas durch Zufuhr pulverförmiger Materialien auf ca. 800 bis 900°C ab, ehe der Gasstrom die gegenüberliegende Wand des Behälters berührt.

Durch die Zuführungsleitung 10 versorgt man die Einblasöffnungen 13 mit Feinerz. Das Feinerz strömt mit einer Blasrate von 1600 kg/min in den Gasabkühlbehälter 9, wo es aufgeheizt und zu FeO reduziert wird. Stromabwärts erfolgt die Zugabe von ca. 200 kg/min Kalksteinmehl durch die Einblasöffnungen 14 der zugehörigen Versorgungsleitung 11. Im heißen Abgasstrom erfolgt die Entsäuerung, d.h. die Spaltung in CaO und $CO_2$ des zugeführten Kalksteins. Schließlich führt man dem Gasabkühlraum 9 durch die Einblasöffnungen 15, die mit der Versorgungsleitung 12 kommunizieren, Gasflammkohle mit einer Rate von 520 kg/min zu, die im heißen Abgasstrom verkokt.

Der Gasabkühlbehälter 9 weist im Bereich der Zugabeöffnungen für die pulverförmigen Stoffe eine Ausmauerung 16 auf, und im Anschluß daran ist die Wand (17) in dem Bereich, in dem der Abgasstrom auftreffen kann, wassergekühlt.

Das Gemisch aus Abgas, Staub und den ausreagierten pulverförmigen Stoffen sammelt sich im Heißzyklon 18, von wo aus die dem Reaktionsgefäß zuzuführende Mischung aus Koks, FeO und CaO über Förderleitung 6 zum Zugabeort transportiert wird. Das gereinigte Abgas verläßt über Leitung 19 den Heißzyklon 18 und dient zu einem Teil der Heißwinderzeugung. Der verbleibende Rest von ca. 1900 Nm³/min mit einem Heizwert von 840 kcal/Nm³ steht für externe Anwendungen zur Verfügung.

**Patentansprüche**

1. Verfahren zur Herstellung von Eisen in einem gestreckten Reaktionsgefäß (1), das über Unterbaddüsen (7), und Aufblaseinrichtungen (4) verfügt, bei dem der Schmelze kohlenstoffenthaltende Brennstoffe, Eisenerz und/oder vorreduziertes Erz zugeführt und bei dem die der Schmelze entweichenden Reaktionsgase ein- oder mehrstufig mit sauerstoffhaltigen Gasen nachverbrannt werden, dadurch gekennzeichnet, daß die Abgasöffnung des Reaktionsgefäßes versetzt zur Reaktionszone der kohlenstoffhaltigen Brennstoffe und damit außerhalb des Eruptions- und Spritzbereiches angeordnet wird und die Abgastemperatur in der an die Abgasöffnung anschließenden Abgasleitung (8) über der Erstarrungstemperatur der im Abgasstrom mitgeführten Eisentröpfchen gehalten und das Abgas danach in einem anschließenden Raum (9), auf unter 1000°C abgekühlt wird.

2. Verfahren nach Anspruch 1, dadurch gekennzeichnet, daß die Abgase in einem Gasabkühlraum, der über eine Heißgasleitung (8) direkt mit dem Reaktionsgefäß verbunden ist, abgekühlt werden.

3. Verfahren nach den Ansprüchen 1 und 2, dadurch gekennzeichnet, daß die Abgase im Gasabkühlraum (9), unmittelbar nach Austritt aus der Heißgasleitung mit kalten Gasen, Flüssigkeiten und/oder pulverförmigen Stoffen vermischt werden und dadurch die Temperatur auf unter 1000°C gesenkt wird.

4. Verfahren nach einem oder mehreren der Ansprüche 1 bis 3, dadurch gekennzeichnet, daß zum. Anlagern der vom Abgasstrom mitgerissenen Metall- und/oder Metalloxydtröpfchen pulverförmige Substanzen, wie beispielsweise Feinerz, Kalk, Kalkstein, Rohmagnesit, Kohle, Koks, einzeln oder in beliebigen Mischungen, in den Abgasstrom geblasen werden.

5. Verfahren nach einem oder mehreren der Ansprüche 1 bis 4, dadurch gekennzeichnet, daß solche pulverförmigen Substanzen eingeblasen werden, die mit dem Abgas chemisch reagieren.

6. Verfahren nach einem oder mehreren der Ansprüche 1 bis 5, dadurch gekennzeichnet, daß aufgemahlenes Eisenerz mit einer Korngröße kleiner als 0.1 mm in den Abgasstrom geblasen und bis zur Wüstit-Stufe reduziert wird.

**Revendications**

1. Procédé pour préparer du fer dans un réacteur (1) allongé comportant des buses (7) disposées sous le bain et des dispositifs d'insufflation (7), au cours duquel on introduit dans le produit fondu des combustibles contenant du carbone, du minerai de fer et/ou du minerai préréduit, et au cours duquel les gaz de réaction qui se dégagent du produit fondu subissent une postcombustion, en une ou plusieurs étapes, avec des gaz contenant de l'oxygène, caractérisé en ce que l'ouverture pour les gaz dégagés du réacteur est déplacée par rapport à la zone de réaction des combustibles contenant du carbone, cette ouverture étant donc disposée à l'extérieur de la zone d'éruption et d'éclaboussures, la température des gas dégagés étant maintenue au dessus de la température de solidification des gouttelettes de fer entraînées dans le courant de gaz émis, dans la conduite (8) de gaz émis reliée à l'ouverture pour la sortie des gaz, et on refroidit ensuite le gaz dégagé au dessous de 1000°C dans une chambre (9) qui suit.

2. Procédé selon la revendication 1, caractérisé en ce que les gaz dégagés sont refroidis dans une chambre de refroidissement des gaz qui est reliée directement au réacteur par une conduite (8) de gaz chauds.

3. Procédé selon les revendications 1 et 2 caractérisé en ce que les gaz dégagés sont mélangés, dans la chambre (9) de refroidissement des gaz, immédiatement après la sortie de la conduite de gaz chauds, avec des gaz froids, des liquides et/ou des matières en poudre, de telle sorte que la température s'abaisse en dessous de 1000°C.

4. Procédé selon l'une ou plusieurs des revendications 1 à 3, caractérisé en ce que, pour fixer les gouttelettes de métal ou d'oxydes métalliques entraînées par le courant des gaz dégagés, on insuffle dans le courant des gaz dégagés des substances en poudre, comme par exemple des fines de minerai, de la chaux, de la pierre à chaux, de la magnésite brute, du charbon, du coke, sous forme isolée ou en mélanges arbitraires.

5. Procédé selon l'une ou plusieurs des revendications 1 à 4, caractérisé en ce que l'on insuffle des matières pulvérulentes telles qu'elles réagissent chimiquement avec le gaz dégagé.

6. Procédé selon l'une ou plusieurs des revendications 1 à 5, caractérisé en ce que l'on insuffle dans le courant de gaz dégagés du minerai de fer broyé dont la dimension des particules est inférieure à 0,1 mm, et en ce que celui-ci est réduit à l'état de wüstite.

**Claims**

1. A method for producing iron in an elongate reaction vessel (1) provided with underbath nozzles (7) and top blowing means (4), wherein carbonaceous fuels, iron ore and/or prereduced ore are fed to the melt, and the reaction gases escaping from the melt are afterburned with oxygen-containing gases in one or more stages, characterized in that the waste gas aperture of the reaction vessel is offset from the reaction zone of the carbonaceous fuels and thus disposed outside the eruption and splashing area, and the waste gas temperature in the waste gas conduit (8) connected to the waste gas aperture is held above the solidifying temperature of the iron droplets carried along in the waste gas stream, and the waste gas is then cooled to less than 1000°C in an adjoining chamber (9).

2. A method according to claim 1, characterized in that the waste gases are cooled in a gas cooling chamber which is directly connected with the reaction vessel via a hot gas conduit (8).

3. A method according to claims 1 and 2, characterized in that the waste gases in the gas cooling chamber (9), immediately after leaving the hot gas conduit, are mixed with cold gases, liquids and/or powdery substances, which reduces the temperature to less than 1000°C.

4. A method according to one or more of claims 1 to 3, characterized in that powdery substances, for example fine ore, lime, limestone, raw magnesite, coal, coke, are blown singly or in any desired mixtures into the waste gas stream in order to take up the metal and/or metallic oxide droplets carried along in the waste gas stream.

5. A method according to one or more of claims 1 to 4, characterized in that such powdery substances are blown in which react chemically with the gas.

6. A method according to one or more of claims 1 to 5, characterized in that ground iron ore with a grain size smaller than 0.1 mm is blown into the waste gas stream and reduced to the wüstite stage.

Fig.: 1

1